# FASCICULE DE BREVET EUROPEEN

(11) **EP 1 277 825 B1**
(45) Date de publication et mention de la délivrance du brevet: **05.03.2008**
(21) Numéro de dépôt: 02291552.4
(22) Date de dépôt: 21.06.2002
(51) Int. Cl.: C10B 53/00, F23G 5/027, C10G 9/00, C10K 3/00

(54) **Procédé et installation de production de gaz combustibles à partir de gaz issus de la conversion thermique d'une charge solide**
Verfahren und Vorrichtung zur Herstellung von Brenngas aus durch thermische Zersetzung eines Feststoffzusatzes erzeugtem Gas
Process and installation for the production of combustible gas from gas derived from the thermal conversion of a solid charge

(30) Priorité: 18.07.2001 FR 0109640
(43) Date de publication de la demande: 22.01.2003
(73) Titulaire: Institut Français du Pétrole, 92852 Rueil-Malmaison Cedex (FR)
(72) Inventeur: Marty, Eric, 69005 Lyon (FR)

(56) Documents cités:
- EP-A- 0 864 349
- EP-A- 1 077 248
- DE-A- 19 940 001
- US-A- 4 300 915
- ERNST R.: "DICTIONNAIRE GENERAL DE LA TECHNIQUE INDUSTRIELLE, TOME III, ALLEMAND-FRANçAIS" 1986, BRANDSTETTER , WIESBADEN, DE * page 89 * * page 1139 *
- "GRAND LAROUSSE encyclopédique" LAROUSSE , PARIS; FR * page 616 * * page 623 *
- GOEDECKE W.: "WORTERBUCH DER ELEKTROTECHNIK, FERNMELDETECHNIK UND ELEKTRONIK" BRANDSTETTER VERLAG. , WIESBADEN, DE * page 71 *

## Description

La présente invention se rapporte à un procédé et à une installation de production de gaz combustibles à partir de gaz issus de la conversion thermique d'une charge solide contenant une fraction organique, telle que de la biomasse ou des déchets ménagers et/ou industriels.

Les gaz combustibles riches ainsi produits sont dépourvus, d'une part, de produits lourds, comme les goudrons, et, d'autre part, de polluants minéraux, en particulier de sels alcalins.

Ces gaz combustibles peuvent être avantageusement utilisés dans des dispositifs ou des procédés de productions d'énergie tel que des moteurs à gaz, des turbines à gaz, des chaudières ou des brûleurs.

Il est donc particulièrement intéressant de combiner une étape de conversion thermique, par pyrolyse ou thermolyse, d'une charge telle que définie ci-dessus avec une opération de craquage thermique des gaz issus de cette étape de conversion pour produire des gaz combustibles.

Les gaz issus de la conversion de la charge par pyrolyse (ou par thermolyse), dénommés dans la suite de la description gaz de pyrolyse, sont généralement constitués d'un mélange de vapeur d'eau, de gaz incondensables comme du CO, CO₂, H₂, CH₄, C₂H_{X}, C₃H_{Y}, NH₃ et de vapeurs d'hydrocarbures plus lourds comportant au moins 4 atomes de carbone.

Il est possible de convertir les vapeurs d'hydrocarbures lourds par craquage thermique de ces gaz de pyrolyse, de manière à obtenir, à la fin de cette opération, une très grande majorité de gaz incondensables et combustibles.

Un procédé de production de gaz combustibles est déjà connu, notamment par le document US 4 300 915 qui décrit un procédé pour produire de tels gaz combustibles à partir de gaz bruts résultant d'une opération de pyrolyse d'une charge suivie d'un traitement par craquage thermique d'une partie seulement de ces gaz de pyrolyse, craquage ayant pour résultat de produire lesdits gaz combustibles.

Dans ce document, il est prévu que l'autre partie des gaz de pyrolyse soit utilisée pour alimenter des brûleurs qui vont générer l'énergie thermique nécessaire au traitement par craquage.

Ce procédé présente l'inconvénient de ne pouvoir transformer qu'une partie des gaz issus de la pyrolyse et de ce fait le rendement global de l'opération de craquage est diminué.

Le document DE 199 40 001 A1 décrit un procédé et une installation de production de gaz combustibles à partir de gaz issus de la conversion de la charge par pyrolyse.

La présente invention se propose de remédier aux inconvénients mentionnés ci-dessus par un procédé et une installation de production de gaz combustibles grâce auxquels la totalité des gaz de pyrolyse est transformée en gaz combustibles.

Selon l'invention, un procédé de production de gaz combustibles comprenant une conversion thermique d'une charge solide, notamment par pyrolyse, générant des résidus solides et des gaz bruts, une combustion desdits résidus solides produisant des gaz de combustion, et un craquage thermique des gaz bruts pour produire des gaz combustibles avec l'utilisation de tout ou partie des gaz de combustion pour alimenter en énergie thermique l'opération de craquage thermique des gaz bruts est caractérisé en ce qu'on mélange les gaz de combustion avec de l'air frais pour obtenir la température souhaitée pour l'opération de craquage thermique.

Avantageusement, on peut dériver une partie des gaz de combustion avant leur utilisation pour l'opération de craquage pour apporter l'énergie nécessaire à l'opération de conversion thermique de la charge solide.

De manière préférentielle, on peut utiliser les gaz de combustion pour alimenter au moins un moyen de chauffage pour l'opération de craquage thermique des gaz bruts.

De manière avantageuse, on peut réguler la température et la vitesse de montée en température dans le moyen de craquage en agissant sur le débit et la quantité des gaz de combustion et/ou de l'air frais.

De manière préférentielle, on peut chauffer de manière indirecte les gaz bruts durant l'opération de craquage thermique.

En variante, on peut chauffer de manière directe les gaz bruts durant l'opération de craquage thermique.

L'invention concerne également une installation de production de gaz combustibles à partir d'une charge solide comprenant un moyen de conversion thermique de la charge, notamment par pyrolyse, un moyen de combustion des résidus solides issus de la pyrolyse et un moyen de craquage thermique des gaz bruts issus de la dite pyrolyse, un moyen de transport vers le moyen de craquage de tout ou partie de l'énergie thermique issue du moyen de combustion et un moyen de chauffage du moyen de craquage, caractérisée en ce que les moyens de chauffage sont alimentés en air frais par une voie d'alimentation en air de manière à obtenir la température souhaitée pour l'opération de craquage.

Le moyen de transport peut comprendre une voie en dérivation de la voie de liaison.

L'installation peut comprendre, au point de dérivation, un moyen de régulation des gaz de combustion vers le moyen de conversion thermique et vers le moyen de craquage.

Les moyens de chauffage peuvent être des moyens de chauffage indirect.

En variante, les moyens de chauffage peuvent être des moyens de chauffage direct.

Les moyens de chauffage peuvent comporter au moins un moyen d'injection des gaz de combustion à l'intérieur du moyen de craquage.

L'installation peut comprendre des moyens de réglage associés au moyen de combustion pour régler la combustion des résidus solides dans ledit moyen de combustion.

D'autres avantages et caractéristiques de l'invention ressortiront à la lecture de la description qui va suivre, donnée uniquement à titre d'exemple, et à laquelle sont annexés des dessins sur lesquels :
- la figure 1 est un schéma montrant les éléments de l'installation de production de gaz combustibles selon l'invention ;
- la figure 2 est une vue en coupe longitudinale d'un réacteur de craquage thermique utilisé dans l'installation selon l'invention ;
- la figure 3 est une vue en coupe longitudinale d'une variante du réacteur de la figure 2 ;
- la figure 4 est un schéma montrant les éléments d'une installation de traitement des gaz combustibles produits selon l'invention.

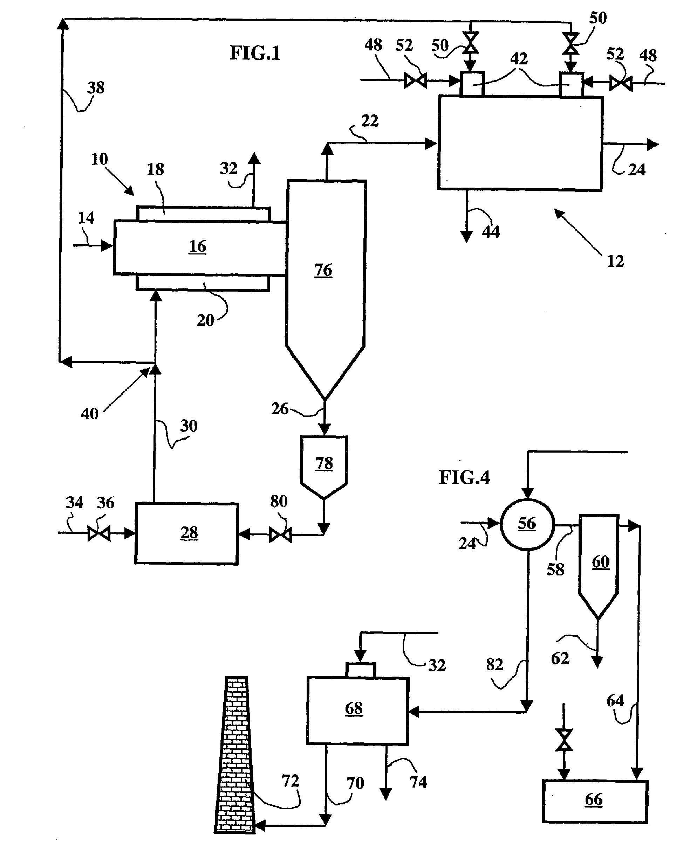

On se réfère maintenant à la figure 1 qui est un schéma fonctionnel montrant les différents éléments constitutifs d'un mode de réalisation de l'invention et dans lequel un four de pyrolyse 10 est associé à un réacteur de craquage thermique 12 pour la production de gaz combustibles.

Le four 10 est alimenté par une voie 14 avec une charge principalement solide pouvant contenir une fraction organique, telle que des déchets urbains et/ou industriels ou de la biomasse.

Ce four 10 est de préférence un four tournant qui a pour capacité de traiter des charges variées tant en taille qu'en composition et peut donc être alimenté avec une charge principale comme de la biomasse ou des mélanges de charges solides contenant de la matière organique, tels que des déchets ménagers, des déchets industriels banals ou des boues de station d'épuration.

La charge introduite dans ce four peut être traitée au préalable de son introduction de manière à la mettre en adéquation avec les spécifications du four, tel que la granulométrie maximum ou l'humidité, et cela en mettant en ceuvre des techniques conventionnelles tel que broyage, séchage ou autres.

Notamment, ces spécifications prévoient d'utiliser une charge avec une granulométrie maximum inférieure à 30 cm, de préférence inférieure à 10 cm, et une humidité qui doit être ramenée à 40% maximum en poids, de préférence à 20% en poids, car le taux d'humidité de la charge a une influence sur la réaction de craquage thermique et influence donc le rendement du réacteur de craquage.

De manière préférentielle, on traitera des charges dont l'humidité initiale est telle que le ratio massique eau/gaz issus de la pyrolyse se situe entre 0,1 et 10 car, dans ces valeurs, la vapeur d'eau a un effet positif sur le craquage en limitant voire en empêchant la formation de dépôts de résidus carbonés.

Ce four comprend une enceinte 16, rotative dans le cas d'un four tournant, entourée d'une enveloppe externe fixe fermée 18 ménageant un espace de chauffage annulaire fermé 20 apte à recevoir un fluide à haute température pour le chauffage de la charge présente dans cette enceinte.

Sous l'effet de ce fluide et à l'issue de la conversion thermique réalisée dans l'enceinte en absence totale d'air, comme cela se réalise habituellement par une pyrolyse, la charge subit une dégradation thermique qui aboutit, en sortie du four, à la formation d'une phase gazeuse, dénommée ci-après gaz bruts, et d'une phase solide riche en carbone, intitulée coke dans la suite de la description.

A la sortie du four, les gaz bruts sont dirigés par une voie 22 vers le réacteur de craquage thermique 12 pour transformation de ces gaz bruts en gaz combustibles qui seront récupérés par une voie 24 disposée en sortie de réacteur, et le coke est acheminé par une voie 26, assurant une étanchéité vis-à-vis de l'extérieur telle que par un ensemble de vannes réalisant un sas (non représenté), vers un moyen de combustion 28 permettant de générer l'énergie calorifique nécessaire à l'opération de pyrolyse de la charge introduite dans l'enceinte 16 du four 10 et qui est transportée, en totalité ou en partie, par une voie de liaison 30 dans l'espace de chauffage annulaire 20 pour ensuite ressortir par une voie d'évacuation 32.

Le moyen de combustion 28 peut être un lit fluidisé, un lit fixe, un foyer à vis, un foyer à grille, un foyer cyclone ou tout autre dispositif permettant de brûler des combustibles essentiellement solides.

Ce moyen de combustion 28 est alimenté par de l'air de combustion, pouvant être appauvri en O2 par mélange avec des fumées recyclées ou éventuellement être préchauffé, via une voie 34 comportant une vanne de régulation 36 pour régler la température de combustion du coke et de ce fait la température des gaz de combustion issus du moyen de combustion 28.

C'est à partir du moyen de combustion 28 qu'est apportée l'énergie nécessaire à l'opération de craquage thermique des gaz bruts.

Plus précisément, cette énergie, sous forme de gaz chauds, dénommées ci-après gaz de combustion, est transportée, en totalité ou en partie, par une voie en dérivation 38 qui prend naissance en un point de dérivation 40 sur la voie 30. Ce point de dérivation est prévu en amont de l'espace de chauffage 20, et aboutit à des moyens de chauffage 42 adaptés au réacteur 12.

Les gaz de combustion, une fois utilisés dans les moyens de chauffage 42 du réacteur, ressortent par une voie 44 pour être évacuer d'une manière connue en soi.

En fonction de la température des gaz de combustion issus des moyens de chauffage 42, ceux-ci peuvent être réutilisés afin d'augmenter le rendement thermique de l'installation. En particulier, tout ou partie des gaz provenant de la voie 44 peuvent être utilisés pour chauffer l'enceinte tournante 16 après introduction dans la double enveloppe 18 et circulation dans l'espace annulaire 20.

Le point de dérivation 40 sera équipé de tous moyens connus, tels que qu'une vanne associée à des moyens de commande et de réglage (non représentés), pour permettre une régulation adéquate entre l'énergie thermique à fournir au four 10 et celle au réacteur 12.

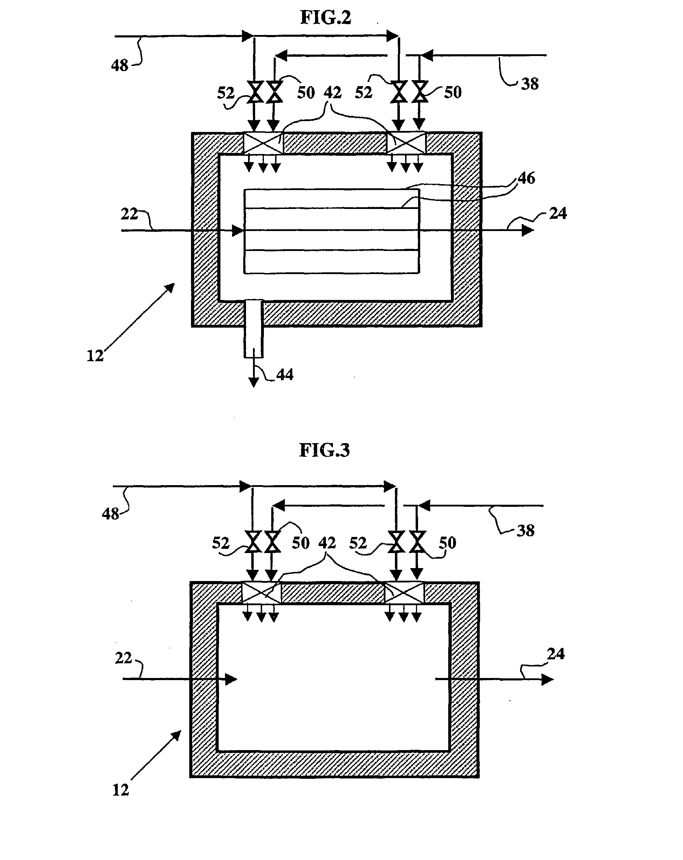

Selon la figure 2, le réacteur de craquage 12 comporte une enveloppe en matériau réfractaire à l'intérieur de laquelle sont disposés des tubes 46, de préférence métalliques, dans lesquels circulent les gaz bruts provenant de la voie 22. Ces tubes communiquent par une de leurs extrémités avec la voie 22 et par l'autre de leurs extrémités avec la voie 24.

Les moyens de chauffage qui sont alimentés par les gaz de combustion via la voie 38 sont au moins un moyen d'injection des gaz de combustion, ici un diffuseur 42 qui, dans l'exemple de réalisation décrit, sont au nombre de deux disposés dans la paroi du réacteur et qui vont injecter les gaz de combustion à l'intérieur du réacteur pour chauffer les tubes 40 de manière à obtenir le craquage des gaz bruts qui y circulent avec le meilleur taux de conversion et cela en tenant compte de la vitesse de montée en température et du temps de séjour dans le réacteur.

De moyens de régulations de la température de craquage ainsi que de la vitesse de montée en température sont avantageusement réalisés sous la forme d'une voie d'alimentation en air frais 48 et de vannes de réglage 50, 52 qui sont respectivement associées à l'arrivée des gaz de combustion et à l'arrivée d'air frais qui aboutit également aux diffuseurs 42.

Compte tenu de la température souhaitée et de la vitesse de montée en température dans le réacteur de craquage, les débits et quantités de gaz de combustion et d'air frais injectés par les diffuseurs 42 dans ce réacteur seront réglés par les vannes de réglage 50, 52.

Pour obtenir la réaction de craquage thermique, les gaz de combustion, éventuellement mélangés avec de l'air frais, vont chauffer la paroi des tubes 46, ce qui va se traduire par un craquage thermique des gaz bruts circulant dans ces tubes.

Ainsi, compte tenu des paramètres de température et de vitesse, les hydrocarbures lourds présent dans les gaz bruts sont convertis par craquage thermique en gaz légers et ressortent par la voie 24 pour être soumis à un traitement ultérieur, comme cela sera plus précisément explicité dans la suite de la description en relation avec la figure 4.

Bien entendu, l'arrangement des tubes (nombre, disposition, diamètre,...) associé aux paramètres de température et de vitesse précités se fera de façon à obtenir le meilleur taux de conversion des gaz bruts, tout en minimisant la formation de dépôt de résidus carbonés.

Il est important de noter que le craquage thermique des gaz bruts s'effectue, dans le réacteur de la figure 2, en absence d'air.

La figure 3 est une variante selon laquelle les gaz bruts ne circulent pas dans des tubes, mais pénètrent par la voie 22 directement à l'intérieur du volume délimité par l'enveloppe du réacteur 12 et ressortent, après craquage thermique, par la voie 24 sous forme d'un mélange de gaz combustibles et de gaz de combustion.

Dans cette variante, le réacteur 12 comporte une enveloppe en matériau réfractaire à l'intérieur de laquelle pénètrent, d'une part, les gaz bruts par la voie 22 et, d'autre part, les gaz de combustion par les diffuseurs 42. Ces gaz de combustion proviennent de la voie 38 et sont éventuellement associés à de l'air frais provenant de la voie 48, les débits et quantités des gaz de combustion et de l'air frais étant régulés, comme précédemment décrit, par les vannes de régulation 50, 52.

A l'intérieur de cette enveloppe les gaz bruts et les gaz de combustion (éventuellement associés à de l'air frais) se mélangent et l'énergie thermique nécessaire à l'opération de craquage thermique est directement procurée par les gaz de combustion.

Ainsi, à la sortie du réacteur, la voie 24 véhiculera un mélange de gaz combustibles issus du craquage thermique et de gaz de combustion.

Bien entendu, ce mélange sera traité ensuite par tous moyens appropriés pour pouvoir utiliser les gaz combustibles qu'il contient.

On se reporte maintenant à la figure 4 qui décrit un exemple de traitement des gaz combustibles issus du réacteur de craquage 12 par la voie 24 et des gaz de combustion ayant été utilisés dans les moyens de chauffage du four à pyrolyse 10 et qui sont évacués par la voie 32, comme cela a été décrit en relation avec les figures 1 et 2.

Les gaz combustibles issus de la voie 24 sont refroidis rapidement par un échangeur de chaleur 56 de façon à arrêter les réactions chimiques puis, en sortie d'échangeur, sont dirigés par une voie 58 vers un moyen de filtrage et de séparation 60 pour en éliminer les particules solides en suspension et les évacuer.

Les particules solides sont évacuées par une voie 62 vers un dispositif de stockage (non représenté) et les gaz combustibles épurés sont utilisés, dans l'exemple représenté, par une voie 64, pour alimenter un moyen de production d'énergie 66, tel qu'un moteur ou une turbine.

Bien entendu et cela sans sortir du cadre de l'invention, il peut être prévu que la voie 64 soit raccordée à un dispositif de stockage des gaz combustibles, stockage pouvant se réaliser après une opération de compression desdits gaz épurés.

En ce qui concerne les gaz de combustion ayant été utilisés pour le chauffage du four 10 et évacués par la voie 32, ces gaz sont introduits dans un moyen de récupération de chaleur 68. Les fumées issues de ce moyen sont ensuite évacuées par une voie 70 vers une cheminée 72 alors que l'énergie (vapeur, eau chaude,...) issue de ce moyen de récupération de chaleur est évacuée vers des moyens ou utilisations appropriés par une voie 74.

Le procédé de production de gaz combustibles sera explicité maintenant en relation avec la figure 1.

La charge est introduite (avec ou sans prétraitement) par la voie 14 dans l'enceinte 16 du four 10 par l'intermédiaire d'un dispositif (non représenté) qui permet d'assurer l'alimentation et l'étanchéité à l'air dudit four.

La charge, dans le cas d'un four tournant, progresse à l'intérieur de l'enceinte 16 et, sous l'action de la chaleur générée par les gaz de combustion circulant dans l'espace de chauffage annulaire 20, est débarrassée de son humidité résiduelle puis subit une dégradation thermique en absence totale d'air (pyrolyse).

Il est à noter que la circulation des gaz de combustion dans l'espace de chauffage annulaire 20 peut être effectuée à contre courant ou à co-courant de la charge circulant dans l'enceinte 16 et cela en fonction des paramètres de vitesse de chauffage et de température recherchés. La température des gaz de combustion présente dans cette espace de chauffage est comprise entre 600°C et 1400°C et de préférence entre 800°C et 1200°C. Le chauffage de la charge est réalisé par le transfert énergétique par rayonnement et par convection des gaz de combustion à la paroi métallique de l'enceinte 16.

Cette opération de pyrolyse s'effectue sous une température comprise entre 300°C et 900°C, de préférence entre 500°C et 700°C, sous une pression proche de la pression atmosphérique. Le temps de séjour de la charge à l'intérieur du four est compris entre 30 et 180 minutes, de préférence entre 45 et 90 minutes.
De plus, la vitesse de chauffe est comprise entre 5 et 50°C/minute de façon à minimiser la formation de produits lourds.

En sortie du four, la dégradation de la charge forme, d'une part, le coke qui va être évacué par la voie 26 directement ou indirectement vers le moyen de combustion 28 et, d'autre part, les gaz bruts qui vont être dirigés vers le réacteur de craquage thermique12.

La chaleur générée par la combustion du coke dans le moyen de combustion 28 va être utilisée, pour une partie, pour le chauffage du four 10 par la voie 30 et, pour l'autre partie, pour le chauffage du réacteur 12 par la voie 38.

Les gaz bruts vont subir une opération de craquage thermique dans le réacteur sous une température comprise entre 800 et 1200°C, selon le dispositif décrit en relation avec la figure 2 ou avec la figure 3. Puis, les gaz combustibles résultant de ce craquage, sont évacués par la voie 24 pour être traités de manière adéquate, comme celle décrite à titre d'exemple en relation avec la figure 4.

Ainsi, tous les gaz bruts sont amenés à être transformés en gaz combustibles et par conséquent la valorisation de la charge en sera d'autant plus grande.

Bien entendu la présente invention n'est pas limitée aux exemples décrits ci-dessus mais englobe toutes variantes.

Notamment, il peut être prévu de disposer d'un séparateur de type cyclone 76 en sortie du four 10 pour mieux séparer le coke des gaz bruts et d'une trémie de stockage 78 permettant de réguler l'alimentation en coke du moyen de combustion 28 par l'intermédiaire d'une vanne de réglage 80.

En outre, en relation avec la figure 4, il peut être prévu une voie de raccordement 82 entre l'échangeur de chaleur 56 et le moyen de recuperation de chaleur 68 afin d'y transférer la chaleur récupérée lors du refroidissement des gaz combustibles par passage dans cet échangeur.

## Revendications

1. Procédé de production de gaz combustibles comprenant une conversion thermique d'une charge solide, notamment par pyrolyse, générant des résidus solides et des gaz bruts, une combustion desdits résidus solides produisant des gaz de combustion, et un craquage thermique des gaz bruts pour produire des gaz combustibles avec l'utilisation de tout ou partie des gaz de combustion pour alimenter en énergie thermique l'opération de craquage thermique des gaz bruts **caractérisé en ce qu'**on mélange les gaz de combustion avec de l'air frais pour obtenir la température souhaitée pour l'opération de craquage thermique.

2. Procédé selon la revendication 1, **caractérisé en ce qu'**on dérive une partie des gaz de combustion avant leur utilisation pour l'opération de craquage pour apporter l'énergie nécessaire à l'opération de conversion thermique de la charge solide.

3. Procédé selon la revendication 1 ou 2, **caractérisé en ce qu'**on utilise les gaz de combustion pour alimenter au moins un moyen de chauffage (42) pour l'opération de craquage thermique des gaz bruts.

4. Procédé selon l'une des revendications 1 à 3, **caractérisé en ce que** l'on régule la température et la vitesse de montée en température dans le moyen de craquage (12) en agissant sur le débit et la quantité des gaz de combustion et/ou de l'air frais.

5. Procédé selon l'une des revendications 1 à 4, **caractérisé en ce que** l'on chauffe de manière indirecte les gaz bruts durant l'opération de craquage thermique.

6. Procédé selon l'une des revendications 1 à 4, **caractérisé en ce que** l'on chauffe de manière directe les gaz bruts durant l'opération de craquage thermique.

7. Installation de production de gaz combustibles à partir d'une charge solide comprenant un moyen de conversion thermique (10) de la charge, notamment par pyrolyse, un moyen de combustion (28) des résidus solides issus de la pyrolyse et un moyen de craquage thermique (12) des gaz bruts issus de la dite pyrolyse, un moyen de transport (38) vers le moyen de craquage (12) de tout ou partie de l'énergie thermique issue du moyen de combustion (28) et un moyen de chauffage (42) du moyen de craquage (12), **caractérisée en ce que** les moyens de chauffage (42) sont alimentés en air frais par une voie d'alimentation en air (48) de manière à obtenir la température souhaitée pour l'opération de craquage.

8. Installation selon la revendication 7 dans laquelle une voie de liaison (30) relie le moyen de conversion thermique (10) et le moyen de combustion (28), **caractérisée en ce** le moyen de transport comprend une voie en dérivation (38, 40) de la voie de liaison (30).

9. Installation selon la revendication 8, **caractérisée en ce qu'**elle comprend, au point de dérivation (40), un moyen de régulation des gaz de combustion vers le moyen de conversion thermique (10) et vers le moyen de craquage (12).

10. Installation selon la revendication 7, **caractérisé en ce que** les moyens de chauffage (42) sont des moyens de chauffage indirect.

11. Installation selon la revendication 7, **caractérisé en ce que** les moyens de chauffage (42) sont des moyens de chauffage direct.

12. Installation selon la revendication 7, **caractérisée en ce que** les moyens de chauffage comportent au moins un moyen d'injection (42) des gaz de combustion à l'intérieur du moyen de craquage (12).

13. Installation selon la revendication 7, **caractérisée en ce qu'**elle comprend des moyens de réglage (34, 36 ; 78, 80) associés au moyen de combustion (28) pour régler la combustion des résidus solides dans ledit moyen de combustion.

## Claims

1. A method for producing combustible gases including a thermal conversion of a solid load, especially by pyrolysis, generating solid residues and raw gases, a combustion of said solid residues producing combustion gases, and a thermal cracking of the raw gases in order to produce combustible gases with the use of all or part of the combustion gases in order to supply thermal energy to the operation for the thermal cracking of the raw gases, **characterised in that** the combustion gases are mixed with fresh air in order to obtain the desired temperature for the thermal cracking operation.

2. The method according to Claim 1, **characterised in that** a part of the combustion gases is diverted before they are used for the cracking operation in order to provide the energy required for the solid load thermal conversion operation.

3. The method according to Claim 1 or 2, **characterised in that** the combustion gases are used in order to supply at least one heating means (42) for the raw gas thermal cracking operation.

4. The method according to one of Claims 1 to 3, **characterised in that** the temperature and the temperature increase speed are regulated in the cracking means (12) by acting on the flow rate and the quantity of the combustion gases and/or the fresh air.

5. The method according to one of Claims 1 to 4, **characterised in that** the raw gases are heated indirectly during the thermal cracking operation.

6. The method according to one of Claims 1 to 4, **characterised in that** the raw gases are heated directly during the thermal cracking operation.

7. An installation for producing combustible gases from a solid load including a means (10) for thermally converting the load, especially by pyrolysis, a combustion means (28) for the solid residues coming from the pyrolysis and a means (12) for thermally cracking the raw gases coming from said pyrolysis, a means (38) for transporting to the cracking means (12) all or part of the thermal energy coming from the combustion means (28) and a heating means (42) for the cracking means (12), **characterised in that** the heating means (42) are supplied with fresh air by an air supply channel (48) so as to obtain the desired temperature for the cracking operation.

8. The installation according to Claim 7, wherein a connecting channel (30) connects the thermal conversion means (10) and the combustion means (28), **characterised in that** the transport means includes a channel (38, 40) diverting from the connecting channel (30).

9. The installation according to Claim 8, **characterised in that** it includes, at the diversion point (40), a means for regulating the combustion gases towards the thermal conversion means (10) and towards the cracking means (12).

10. The installation according to Claim 7, **characterised in that** the heating means (42) are indirect heating means.

11. The installation according to Claim 7, **characterised in that** the heating means (42) are direct heating means.

12. The installation according to Claim 7, **characterised in that** the heating means comprise at least one means (42) for injecting combustion gases inside the cracking means (12).

13. The installation according to Claim 7, **characterised in that** it includes adjusting means (34, 36; 78, 80) associated with the combustion means (28) for adjusting the combustion of the solid residues in said combustion means.

## Patentansprüche

1. Verfahren zur Erzeugung von Brenngasen, umfassend eine thermisch Umwandlung einer festen Beschichtung insbesondere durch Pyrolyse, die feste Reststoffe und Rohgase erzeugt, wobei eine Verbrennung der festen Reststoffe Brenngase erzeugt, und ein thermisches Kracken der Rohgase, um Brenngase unter Verwendung der Gesamtheit oder eines Teils der Verbrennungsgase zu erzeugen, um den Vorgang des thermischen Krackens der Rohgase mit Wärmeenergie zu versorgen, **dadurch gekennzeichnet, dass** die Verbrennungsgase mit frischer Luft gemischt werden, um die für den Vorgang des thermischen Krackens gewünschte Temperatur zu erhalten.

2. Verfahren nach Anspruch 1, **dadurch gekennzeichnet, dass** ein Teil der Verbrennungsgase vor ihrer Verwendung für den Vorgang des Krackens abgezweigt wird, um die für den Vorgang der thermischen Umwandlung der festen Beschichtung erforderliche Energie zu liefern.

3. Verfahren nach Anspruch 1 oder 2, **dadurch gekennzeichnet, dass** die Verbrennungsgase verwendet werden, um mindestens ein Heizmittel (42) für den Vorgang des thermischen Krackens der Rohgase zu versorgen.

4. Verfahren nach einem der Ansprüche 1 bis 3, **dadurch gekennzeichnet, dass** die Temperatur und die Anstiegsgeschwindigkeit der Temperatur im Krackmittel (12) durch Einwirken auf die Durchflussmenge und die Menge der Verbrennungsgase und/oder der Frischluft reguliert werden.

5. Verfahren nach einem der Ansprüche 1 bis 4, **dadurch gekennzeichnet, dass** die Rohgase während des Vorgangs des thermischen Krackens indirekt erhitzt werden.

6. Verfahren nach einem der Ansprüche 1 bis 4, **dadurch gekennzeichnet, dass** die Rohgase während des Vorgangs des thermischen Krackens direkt erhitzt werden.

7. Anlage zur Erzeugung von Brenngasen aus einer festen Beschichtung, umfassend Mittel zur thermischen Umwandlung (10) der Beschichtung insbesondere durch Pyrolyse, ein Mittel (28) zum Verbrennen der festen Reststoffe, die aus der Pyrolyse stammen, und ein Mittel (12) zum thermischen Kracken der aus der Pyrolyse kommenden Rohgase, ein Mittel (38) zum Transport der Gesamtheit oder eines Teils der aus dem Verbrennungsmittel (28) kommenden Wärmeenergie zum Krackmittel (12) und ein Mittel (42) zur Erhitzung des Krackmittels (12), **dadurch gekennzeichnet, dass** die Erhitzungsmittel (42) mit Frischluft über einen Luftversorgungsweg (48) versorgt werden, um die für den Vorgang des Krackens gewünschte Temperatur zu erhalten.

8. Anlage nach Anspruch 7, bei der ein Verbindungsweg (30) das Mittel (10) zur thermischen Umwandlung und das Verbrennungsmittel (28) verbindet, **dadurch gekennzeichnet, dass** das Transportmittel einen vom Verbindungsweg (30) abzweigenden Weg (38, 40) umfasst.

9. Anlage nach Anspruch 8, **dadurch gekennzeichnet, dass** sie am Abzweigungspunkt (40) ein Mittel zur Regulierung der Verbrennungsgase zum Mittel (10) zur thermischen Umwandlung und zum Krackmittel (12) umfasst.

10. Anlage nach Anspruch 7, **dadurch gekennzeichnet, dass** die Erhitzungsmittel (42) Mittel zur indirekten Erhitzung sind.

11. Anlage nach Anspruch 7, **dadurch gekennzeichnet, dass** die Erhitzungsmittel (42) Mittel zur direkten Erhitzung sind.

12. Anlage nach Anspruch 7, **dadurch gekennzeichnet, dass** die Erhitzungsmittel mindestens ein Mittel (42) zum Einspritzen der Verbrennungsgase in das Innere des Krackmittels (12) umfassen.

13. Anlage nach Anspruch 7, **dadurch gekennzeichnet, dass** es Einstellmittel (34, 36; 78, 80) umfasst, die mit dem Verbrennungsmittel (28) verbunden sind, um die Verbrennung der festen Reststoffe in dem Verbrennungsmittel zu regeln.
